# EUROPEAN PATENT APPLICATION

(11) **EP 1 731 994 A1**
(43) Date of publication of application: **13.12.2006**
(21) Application number: 05012381.9
(22) Date of filing: 08.06.2005
(51) Int. Cl.: G06F 3/033, G06F 9/44

(54) **Display button set with corresponding indications on screen of display**

(71) Applicant: Associated Industries China, Inc., Taipei (TW)
(72) Inventor: Young, Kai Li, Jhongjheng District Taipei City 100 (TW)
(74) Representative: Viering, Jentschura & Partner

(57) **Abstract**

A display button set has corresponding indications on a screen of a display so that the instruction is operated by intuition. The display button set comprises an instruction table displayed on a screen of a display; a set of display adjustment buttons corresponding to the instruction table; each display adjustment button having a corresponding to instructions in the instruction table. When a display adjustment button is clicked, the instruction corresponding to the display adjustment button will be inputted into a processor; and the processor converts the instruction into a signal and then the signal is performed by the display body and are stored in a memory.

## Description

### FIELD OF THE INVENTION

The present invention relates to display adjustment buttons, and particularly to a display button set with corresponding indications on a screen of a display, wherein the arrangement of the display adjustment buttons are corresponding to the instruction table so that the user can adjust the setting values of the display by intuition.

### BACKGROUND OF THE INVENTION

In the lower side of a display is installed with a set of display adjust buttons for adjusting the horizontalness, contrast, illumination, etc. of the display. Generally, the button set includes a power switch, an instruction call out switch, and two direction buttons. In use, the power is on. Then the instruction call out switch is pressed to display various instructions and then the user selects desire instructions by the two directional keys.

In selection, the directional keys are pressed repeatedly so as to have a desired function. Thereby a desired function cannot be found quickly and easily. Thereby the repeated operation will destroy the button so as to reduce the lifetime of the button.

### SUMMARY OF THE INVENTION

Accordingly, the primary object of the present invention is to provide a display button set with corresponding indications on a screen of a display, wherein the arrangement of the display adjustment buttons are corresponding to the instruction table so that the user can adjust the setting values of the display by intuition.

To achieve above object, the present invention provide a display button set with corresponding indications on a screen of a display so that instructions is operated by intuition. The present invention comprises an instruction table displayed on a screen of a display; a set of buttons corresponding to the instruction table; each button having an corresponding to instructions in the instruction table. When a button is clicked, the instruction corresponding to the button will be inputted into a processor; the processor converts the instruction into a signal and then the signal is performed by the display body and are stored in a memory.

The various objects and advantages of the present invention will be more readily understood from the following detailed description when read in conjunction with the appended drawing.

### Brief description of the Drawings

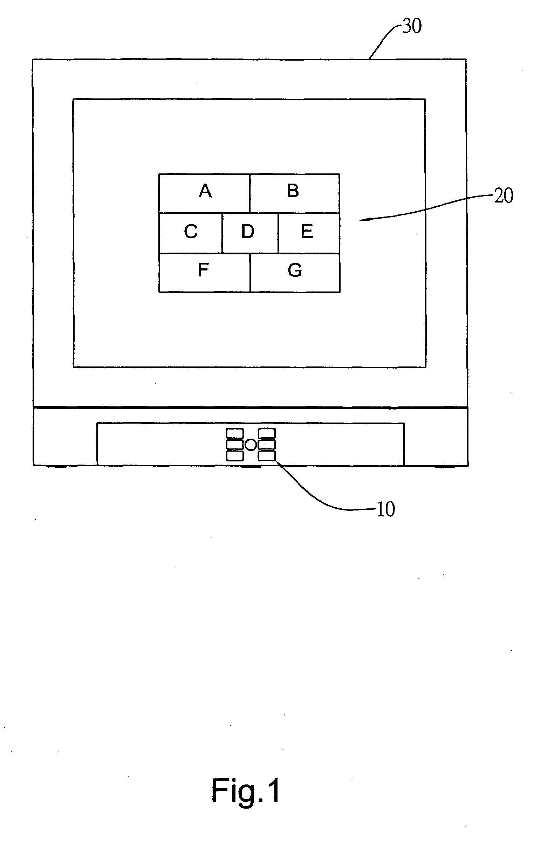

Fig. 1 shows one embodiment of the present invention.
Fig. 2 shows that the instruction table of the present invention.
Fig. 2B shows the button set according to the present invention.
Fig. 3 shows a flow diagram of the present invention.

### DETAILED DESCRIPTION OF THE INVENTION

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

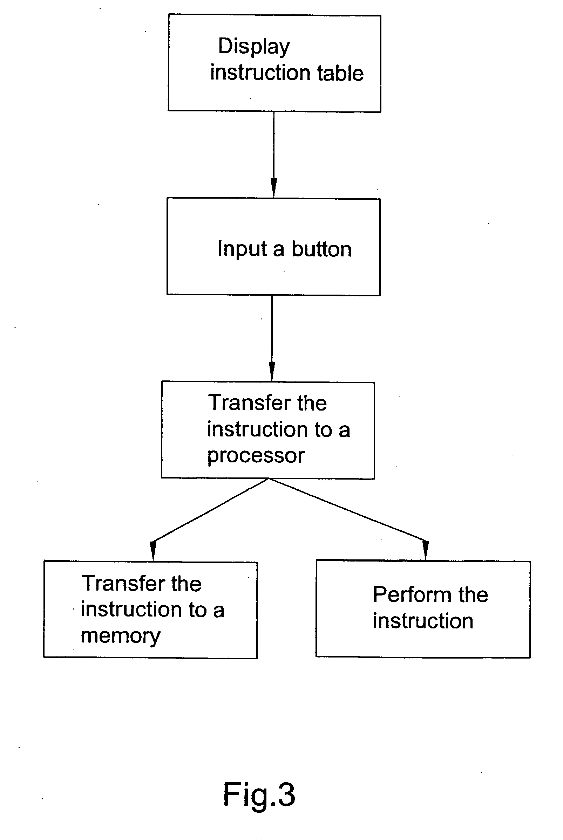

A display body 30 has an instruction table 20 corresponding to seven display adjustment buttons (A', B', C', D', E', F', G') on the display screen, as shown in Fig. 3. The display adjustment buttons are corresponding to the instruction table 20 and are arranged to have the same position relations of the instruction table 20; and each display adjustment button has corresponding to instructions in the instruction table. When a button is clicked, the display adjustment instruction corresponding to the button will be inputted into a processor (not shown). The processor converts the instruction into a signal and then the signal is performed by the display body 30 and is stored in a memory (not shown). In the present invention, the number of the display adjustment button is not confined by seven buttons, other number is permissible and is within the scope and spirit of the present invention.

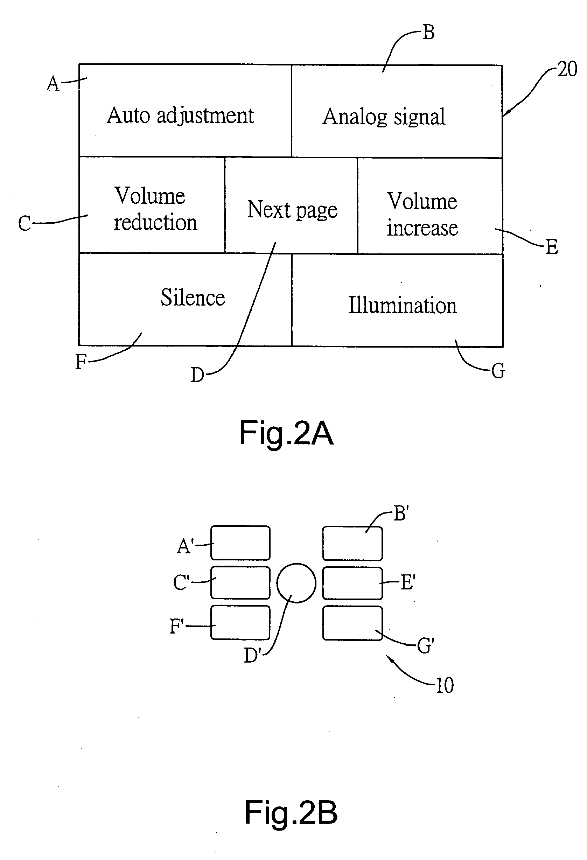

With reference to Figs. 2A and 2B, if it is desired to select an auto adjustment instruction A. It is only necessary to select a function of "auto-adjust", the user only needs to click the button A' in the buttons. Similarly, instruction B is corresponding to the button B'. Instruction C is corresponding to the button C'. Instruction D is corresponding to the button D'. instruction E is corresponding to the button E'. Instruction F is corresponding to the button F'. Instruction G is corresponding to the button G'.

In the present invention, the buttons can be combined with respective light emitting bodies.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A display button set with corresponding indications on a screen of a display so that instructions is operated by intuition, the display button set comprising:
an instruction table displayed on a screen of a display;
a set of display adjustment buttons for adjusting setting values of the display; the display adjustment buttons being corresponding to the instruction table and being arranged to have the same position relations of the instruction table; each display adjustment button having an corresponding to instructions in the instruction table;
wherein when a display adjustment button is clicked, the instruction corresponding to the display adjustment button will be inputted into a processor; the processor converts the instruction into a signal and then the signal is performed by the display body and are stored in a memory.

2. The display button set with corresponding indications on a screen of a display as claimed in claim 1, wherein there are seven instructions in the instruction table, and in the screen, six instructions are arranged to enclose the other instruction so as to form a close shape.

3. The display button set with corresponding indications on a screen of a display as claimed in claim 1, wherein each display adjustment button is installed with a light emitting body.

4. The display button set with corresponding indications on a screen of a display as claimed in claim 3, wherein the light emitting body is a light emitting diode.
